# DEMANDE DE BREVET EUROPEEN

(11) **EP 3 822 581 A1**
(43) Date de publication de la demande: **19.05.2021**
(21) Numéro de dépôt: 20208272.3
(22) Date de dépôt: 18.11.2020
(51) Int. Cl.: G01C 15/02, G01C 11/06, G06K 9/32

(54) **PROCÉDÉ D'ACQUISITION D'AU MOINS UNE SCÈNE**

(30) Priorité: 18.11.2019 FR 1912851
(71) Demandeur: Soletanche Freyssinet, 92500 Rueil Malmaison (FR)
(72) Inventeur: PERAL, José, 38430 MOIRANS (FR); FRANCOIS, Pierre, 92500 RUEIL-MALMAISON (FR); HOVHANESSIAN, Gilles, 92160 ANTONY (FR)
(74) Mandataire: Nony

(57) **Abrégé**

Procédé d'acquisition d'au moins une scène

Procédé d'acquisition d'au moins une scène, le procédé comportant
a) la mise en place d'au moins trois cibles (10) différentes en des emplacements de cible différents de la scène,
b) la prise d'images numériques de la scène et des cibles au moyen d'un dispositif d'imagerie (40) comportant au moins une caméra, les emplacements de prise d'images étant choisis de telle sorte qu'au moins deux des images se recoupent, et
c) le scan de la scène et des cibles au moyen d'un dispositif de télédétection optique (50), chaque cible comportant :
- un motif caractéristique identifiable par analyse numérique des données du scan (13), dit « motif à scanner », et
- un motif caractéristique identifiable par photogrammétrie (17), dit « motif photogrammétrique ».

## Description

### Domaine technique

La présente invention concerne un procédé d'acquisition d'au moins une scène, notamment urbaine, pour générer un modèle numérique 3D géoréférencé représentant la scène.

### Technique antérieure

Les modèles numériques géoréférencés, notamment représentant des scènes d'un ensemble urbain, fournissent une aide à la conception architecturale ainsi qu'à l'aménagement urbain et territorial.

Il est connu de construire un modèle numérique 3D à partir d'un nuage de points, préalablement acquis par photogrammétrie ou par lasergrammétrie. Pour géoréférencer un tel modèle, des cibles sont généralement disposées dans au moins une des scènes à acquérir, la position des cibles étant elle-même mesurée avec précision dans un référentiel donné. Une telle acquisition est par exemple connue de EP 2 018 515 B1.

Pour géoréférencer les cibles, il est connu de faire appel à un géomètre qui peut utiliser un théodolite, un tachéomètre, une station totale ou un système GNSS, dont la mise en œuvre est complexe et coûteuse en temps. En outre, il est nécessaire de géolocaliser à nouveau les cibles à chaque intervention dans la scène, ce qui a pour conséquence de complexifier l'acquisition.

Il est également connu d'utiliser des systèmes de positionnement par satellite pour géoréférencer les cibles. A l'instar de la technique précédente, le géoréférencement par satellite nécessite de géolocaliser les cibles sur place à chaque intervention, et autant de fois qu'il y a de cibles.

En outre, pour générer un modèle numérique 3D représentant un ensemble urbain avec précision, par exemple d'une ville occupant une superficie de plusieurs kilomètres carrés, des ensembles d'acquisitions de scènes indépendants peuvent être réalisés, chaque ensemble comportant par exemple des acquisitions de scènes dans plusieurs rues adjacentes. Plus de 50 cibles par kilomètre carré peuvent alors être nécessaires pour géoréférencer le modèle, ce qui requiert de nombreuses interventions du géomètre.

Il existe par conséquent un besoin pour faciliter le géoréférencement d'un modèle numérique 3D d'une scène, notamment généré par photogrammétrie, en particulier en limitant l'occurrence d'intervention d'un opérateur qualifié, tel un géomètre.

Il existe également un intérêt pour géoréférencer un modèle numérique 3D d'une installation souterraine, de préférence dans un référentiel absolu, afin de faciliter les interventions dans cette installation souterraine, laquelle est par exemple un réseau d'égouts.

### Exposé de l'invention

L'invention vise à répondre à ce besoin et a pour objet un procédé d'acquisition d'au moins une scène, le procédé comportant:
a) la mise en place d'au moins trois cibles différentes en des emplacements de cible différents de la scène,
b) la prise d'images numériques de la scène et des cibles au moyen d'un dispositif d'imagerie comportant au moins une caméra, les emplacements de prise d'images étant choisis de telle sorte qu'au moins deux des images se recoupent, et
c) le scan de la scène et des cibles au moyen d'un dispositif de télédétection optique, de préférence au moyen d'un lidar,
   chaque cible comportant :
   - un motif caractéristique identifiable par analyse numérique des données du scan, dit « motif à scanner », et
   - un motif caractéristique identifiable par photogrammétrie, dit « motif photogrammétrique ».

La mise en œuvre du procédé selon l'invention facilite le géoréférencement d'un modèle numérique 3D de la scène, notamment obtenu par photogrammétrie. Avantageusement, le modèle numérique 3D peut être mis à l'échelle et optionnellement géoréférencé sans l'intervention d'un géomètre lors de la mise en œuvre du procédé d'acquisition pour géoréférencer les cibles.

Par ailleurs, la mise en œuvre des étapes b) de prise d'images et c) de scan est simplifiée, les mêmes cibles étant imagées et scannées respectivement. Enfin, une éventuelle mise en correspondance d'un modèle numérique obtenu à partir des images et d'un modèle numérique généré à partir du scan est facilitée, les motifs des cibles définissant des références spatiales communes.

La scène est de préférence une zone extérieure urbaine, comportant par exemple des bâtiments tels que des immeubles d'habitations collectives ou des bureaux, des maisons individuelles, du mobilier urbain tels que des lampadaires, des feux de croisement, des panneaux de circulation, panneaux publicitaires, abris ou bancs, entre autres.

La scène peut comporter l'intérieur d'un bâtiment, par exemple un réseau de couloirs et des pièces.

La scène peut comporter une partie aérienne et/ou une partie souterraine, par exemple un réseau d'égouts.

La scène peut s'étendre sur une aire, projetée au sol, supérieure à 1,0 m², voire supérieure à 2,0 m², voire supérieure à 10 m², voire supérieure à 1 km², voire supérieure à 10 km², voire supérieure à 50 km², voire supérieure à 100 km².

La scène peut comporter au moins une pièce mécanique ou une construction, par exemple un bâtiment ou un ouvrage de génie civil, ou un élément d'une construction, par exemple une canalisation.

L'ouvrage de génie civil peut être choisi parmi un pont, un tunnel, notamment routier ou ferroviaire, un réseau d'égout, une route et une rue.

En particulier, la scène peut contenir au moins un branchement de regard d'un réseau d'égout qui débouche en surface.

A l'étape a) les cibles peuvent être présentes en des emplacements de cible variés de la scène. Les emplacements de cible sont différents, et de préférence distants, les uns des autres.

Les cibles sont par exemple fixées sur des objets de la scène, notamment sur un mur d'un bâtiment ou sur un élément de mobilier urbain ou sur un poteau de signalisation, ou posées au sol.

Les cibles peuvent être disposées dans la partie aérienne et/ou dans la partie souterraine de la scène.

Les cibles peuvent être toutes disposées dans la partie aérienne ou dans la partie souterraine.

Lorsque la scène comporte un branchement de regard, une des cibles peut être mise en place dans le branchement de regard et au moins une des autres cibles peut être mise en place dans la partie aérienne, par exemple à moins de 50 m, voire à moins de 10 m, voire à moins de 5 m, voire à moins de 1m du branchement de regard.

Le nombre de cibles et/ou la densité de cibles peuvent varier selon l'étendue de la scène. En particulier, le nombre de cibles peut augmenter avec l'étendue au sol de la scène.

Ainsi à l'étape a), on peut mettre en place plus de cinq cibles, voire plus de dix cibles.

Par « densité au sol de cibles au sol », on entend le rapport du nombre de cibles sur l'aire de la scène projetée verticalement sur le sol.

Par exemple, l'étendue équipée des cibles peut couvrir toute une rue, mieux tout un quartier, voire une pluralité de quartiers.

Au moins une, voire chacune des cibles peut se présenter sous la forme d'une plaque, d'une feuille ou d'une étiquette adhésive.

Chaque cible peut présenter une longueur comprise entre 100 mm et 840 mm et/ou une largeur comprise entre 150 mm et 1200 mm. Par exemple, chaque cible peut présenter une taille comprise entre une taille de feuille A6 et une taille de feuille A0.

Chaque cible comporte un motif photogrammétrique identifiable par traitement photogrammétrique.

De préférence, au moins une des cibles, de préférence chaque cible comporte un support, le motif photogrammétrique étant appliqué sur le support.

Le motif photogrammétrique peut être peint, collé, ou gravé, ou de préférence imprimé sur le support.

Le motif photogrammétrique peut être une étiquette adhésive collée sur le support.

Le motif photogrammétrique peut être codé.

Le motif photogrammétrique codé peut présenter un identifiant reconnaissable par photogrammétrie, l'identifiant étant associé à la cible. L'identifiant peut être un signe alphanumérique ou une suite de tels signes. Le traitement photogrammétrique d'une ou plusieurs du motif photogrammétrique codé peut résulter en la génération de l'identifiant et notamment en l'attribution de l'identifiant au motif codé et à la cible. Chaque cible peut comporter un identifiant unique qui lui est spécifique.

Le motif photogrammétrique codé est par exemple un code à barres ou un code matriciel, notamment un QR code.

En variante, le motif photogrammétrique peut être non-codé. Un exemple de motif photogrammétrique non codé est un cercle complet ou une figure géométrique à quatre segments.

Le motif photogrammétrique peut prendre plusieurs formes. De préférence, le contour du motif photogrammétrique est circulaire, la position du centre du motif photogrammétrique est ainsi invariable par rotation et par changement d'échelle.

De préférence, pour faciliter et notamment automatiser le traitement photogrammétrique, le motif photogrammétrique d'une des cibles est différent du motif photogrammétrique d'au moins une des autres cibles, et de préférence les cibles comportent le même motif à scanner. On simplifie ainsi la fabrication des cibles.

La surface couverte par le motif à scanner et par le motif photogrammétrique peut représenter plus de 30%, mieux plus de 50%, voire plus de 70% de la surface totale du support.

La surface couverte par le motif à scanner peut présenter plus de 30%, mieux plus de 50%, voire plus de 70% de la surface couverte à la fois par le motif à scanner et le motif photogrammétrique.

Le motif à scanner est de préférence appliqué sur le support.

Par exemple, le motif à scanner est peint, collé, ou gravé, ou de préférence imprimé sur le support.

Le motif à scanner est de préférence non-codé. Le motif à scanner peut présenter un contraste suffisant avec le support pour être reconnu par la méthode d'analyse de scan. Le motif à scanner peut être sous une forme d'un damier, par exemple en noir et blanc, ou sous une forme d'un anneau.

Le motif à scanner peut être noir et disposé sur un support blanc.

Le motif photogrammétrique peut être disposé au centre de chaque cible.

Le motif à scanner peut entourer au moins partiellement, voire complètement, le motif photogrammétrique.

Le motif photogrammétrique peut comporter une portion centrale définissant le centre de la cible et le motif à scanner peut être centré par rapport au centre de la cible. Le référencement des positions des données photogrammétrique au moyen des données de scan peut ainsi être facilité.

La portion centrale peut être définie par des contours intérieur et extérieur partageant un même barycentre, qui forme le centre de la cible.

Les contours intérieur et extérieur peuvent être homothétiques l'un de l'autre.

Les contours intérieur et extérieur peuvent délimiter une surface présentant une couleur différente de la surface délimitée par le contour intérieur. Par exemple, la surface définie entre les contours intérieur et extérieur de la portion centrale est un anneau de couleur noire et la surface définie à l'intérieur du contour intérieur est un disque de couleur blanche.

Le motif à scanner peut comporter des première et deuxième parties présentant chacune un contour comportant deux segments, les droites supportant les segments s'intersectant au centre de la cible. Un des segments de la première partie et un des segments de la deuxième partie peuvent être supportés par une même droite passant par le centre de la cible. De préférence, au moins un autre des segments de la première partie et au moins un autre des segments de la deuxième partie sont supportés par une même autre droite qui passe par le centre de la cible.

De préférence, la première partie du motif à scanner est symétrique de la deuxième partie du motif à scanner par rapport au centre de la cible.

Le support peut être en carton, en papier, en bois, ou de préférence en un thermoplastique. Un support en thermoplastique est préféré, car il ne se dégrade pas sous l'effet de l'humidité.

Le support est de préférence rigide. Il présente de préférence la forme d'une plaque plane.

Le support peut être couvert d'une matière adhésive.

Le support peut être peint, notamment en blanc.

La cible peut comporter une canne munie, à une de ses extrémités, d'un pied, par exemple un trépied, pour la tenir en appui sur le sol et le support peut être monté sur son extrémité opposée.

Le support peut présenter un contour, en vue de face, de forme générale circulaire, elliptique ou polygonale, notamment triangulaire, rectangulaire ou carrée.

Le support peut présenter une longueur comprise entre 100 mm et 840 mm et/ou une largeur comprise entre 150 mm et 1200 mm. Par exemple, il présente une taille comprise entre une taille de feuille A6 et une taille de feuille A0.

De préférence, l'étape b) comporte la prise d'images en au moins 5 emplacements de prise d'image, mieux en au moins 10 emplacements de prise d'image, encore mieux en au moins 100 emplacements de prise d'image.

L'étape b) peut comporter la prise de plusieurs images numériques au même emplacement de prise d'image, de préférence selon des points de vue différents.

Les emplacements de prise d'image peuvent être choisis de telle sorte que chacune des cibles disposées à l'étape a) soit visible sur au moins une des images prises à l'étape b).

De préférence, les emplacements de prise d'image sont choisis pour qu'au moins deux images représentent une même cible pour améliorer la qualité du traitement photogrammétrique.

Les emplacements de prise d'image peuvent être choisis de telle sorte qu'au moins deux cibles différentes soient représentées sur une même image de l'ensemble.

Les emplacements de prise d'image peuvent être situés dans une partie aérienne et/ou une partie souterraine de la scène.

L'étape b) peut comporter le déplacement du dispositif d'imagerie le long d'un trajet ouvert ou d'un trajet fermé.

Par « trajet fermé », on entend un trajet où le point de départ et le point d'arrivée se confondent. Par opposition, un « trajet ouvert » comporte un point de départ différent du point d'arrivée.

Le trajet peut comporter plus de 10 emplacements de prise d'image, de préférence plus de 100 emplacements de prise d'image, mieux plus de 1000 emplacements de prise d'image.

Le déplacement du dispositif d'imagerie peut être assuré par le mouvement, notamment de marche, d'un opérateur humain manipulant le dispositif d'imagerie. En variante, le dispositif d'imagerie peut être déplacé au moyen d'un véhicule, par exemple une voiture, ou d'un appareil volant, par exemple un drone, ou d'un engin de levage, par exemple une grue ou un treuil, sur lequel le dispositif d'imagerie est monté.

Le dispositif d'imagerie peut comporter une canne et au moins un étage de prise d'image, de préférence au moins deux étages de prise d'image disposés à des hauteurs différentes sur la canne, chaque étage de prise d'image comportant une pluralité de caméras configurées pour acquérir chacune une image de la scène, les axes de vue des caméras d'un étage d'acquisition étant répartis angulairement autour de l'axe de la canne de sorte que les images prises par le dispositif de prise d'image se recouvrent angulairement.

La canne peut être adaptée à être portée par un opérateur se déplaçant dans la scène. Elle peut comporter en partie inférieure un pied permettant de la poser sur le sol. Le dispositif d'imagerie peut comporter au moins trois, de préférence trois étages de prise d'image. Les caméras de chaque étage étant réparties autour de l'axe longitudinal de la canne, sur un secteur angulaire total compris entre 90° et 120°, de préférence compris entre 150° et 190°, en particulier égal à 180°. L'espacement entre les étages de prise d'image peut être réglable. Les caméras d'un étage de prise d'image sont de préférence fixes les unes par rapport aux autres. Le dispositif d'imagerie peut comporter au moins six, de préférence au moins dix, de préférence au moins douze, notamment quinze caméras.

Un exemple de dispositif d'imagerie adapté est décrit dans la demande FR 1856591.

Les images prises à l'étape b) peuvent être traitées pour générer des nuages de points par photogrammétrie, comme cela sera détaillé plus loin.

A la fin de l'étape c), on peut obtenir un nuage de points scannés. Le nuage de points scannés peut être doté d'une métrique. Ainsi, un tel nuage de points scannés permet la mesure de la distance réelle entre des points dudit nuage, à la précision de la mesure près.

A l'étape c), le dispositif de télédétection optique est de préférence un lidar.

Le dispositif de télédétection optique est différent d'un dispositif de suivi optique. Notamment, il est différent d'un « laser tracker ».

Un dispositif de suivi optique peut notamment émettre un faisceau de lumière, par exemple un faisceau laser, vers une cible qui réfléchit le faisceau de lumière vers le dispositif de suivi optique, permettant au dispositif de suivi optique de détecter puis de suivre spécifiquement la cible lors du mouvement de la cible.

Dans un exemple de mise en œuvre de l'invention, à l'étape c) le scan de la scène et des cibles est réalisé avec au moins une rotation du dispositif de télédétection sur lui-même autour d'un axe de rotation, de préférence fixe durant cette rotation, ou à l'aide de plusieurs capteurs ayant des axes de visée différents.

En variante, le scan de la scène peut être réalisé avec le dispositif de télédétection en mouvement pendant ledit scan.

Le dispositif de télédétection peut être monté sur un véhicule, par exemple une voiture.

Le dispositif de télédétection peut être porté par un appareil volant, par exemple un avion, un hélicoptère, ou un drone.

En variante, le dispositif de télédétection est monté sur un pied.

L'étape b) de prise d'images peut être réalisée avant l'étape c) de scan, ou après l'étape c), ou simultanément à l'étape c).

Les étapes b) et/ou c) peuvent être réalisées par un opérateur humain.

Le procédé d'acquisition peut être mis en œuvre pour acquérir une pluralité de scènes. Les cibles disposées dans une première des scènes sont de préférence toutes différentes des cibles disposées dans les autres scènes.

Le procédé peut comporter une étape ultérieure à l'étape b) et/ou à l'étape c) de traitement des images et/ou du scan respectivement.

Le procédé d'acquisition comporte de préférence la génération d'un nuage de points par analyse numérique des données du scan, dit « nuage de points scannés ». Le traitement des données issues de scan est par exemple mis en œuvre au moyen du logiciel RealWorks® édité par la société Trimble®.

Le procédé comporte de préférence la génération d'un nuage de points, dit « « nuage de points photogrammétriques », par traitement photogrammétrique des images acquises à l'étape b).

Le traitement photogrammétrique peut mettre en œuvre un algorithme classique de corrélation d'images, qui identifie des éléments constitutifs d'une scène sur différentes images prises à l'étape b) selon des axes de vue différents, puis détermine les positions relatives desdits éléments constitutifs. Par exemple, le traitement photogrammétrique est mis en œuvre au moyen du logiciel Metashape® édité par la société Agisoft®.

De préférence, les nuages de points scannés et photogrammétriques comportent chacun les coordonnées d'au moins un point caractéristique, par exemple le centre de chaque cible dans des repères respectifs.

De préférence, les nuages de points scannés et photogrammétriques sont stockés numériquement, notamment sur un moyen de stockage informatique.

Un moyen de stockage informatique est un support d'enregistrement numérique tel qu'une bande magnétique, un disque optique, un disque dur, un disque SSD, une carte SD ou une clé USB.

Avantageusement, une métadonnée relative à la cible est attribuée aux points de la cibles stockés, par exemple aux centres des cibles. La métadonnée peut correspondre à un identifiant de la cible, tel que par exemple reconnu par lecture du motif photogrammétrique qui est codé, comme décrit ci-dessus.

Le procédé peut comporter une étape, ultérieure aux étapes a) et c), de géoréférencement des points caractéristiques des cibles dans le repère lié au nuage de points scannés, notamment dans un référentiel donné, par exemple un référentiel absolu.

Par « référentiel absolu » on désigne un référentiel géodésique dans lequel on peut définir la localisation d'un objet sur terre de manière univoque. Son centre est par exemple proche du barycentre de la terre, ses deux premiers axes sont dans le plan de l'équateur et son troisième axe est proche de l'axe de rotation de la terre. Le référentiel absolu pouvant être utilisé dans le cadre de la présente invention est de préférence choisi parmi les suivants : Réseau Géodésique Français 1993 (RGF93), World Geodetic System (WGS84), International Terrestrial Rotational Service (ITRS) ou European Terrestrial Reference System (ETRS).

Le procédé peut ainsi comporter une étape de géoréférencement du nuage de points scannés, notamment dans un référentiel global, par exemple un référentiel absolu, en particulier en utilisant avantageusement les coordonnées géoréférencées des points caractéristiques des cibles.

De préférence, le nuage de point scannés est géoréférencé en corrélant le nuage de points scannés avec un autre nuage de points représentant au moins la scène et qui est géoréférencé, par exemple au moyen de repères topographiques, ou avec des positions de points mesurées au moyen de repères topographiques.

L'autre nuage de points peut présenter une résolution plus faible que le nuage de points scannés. L'autre nuage de points peut présenter une résolution inférieure à 25 points par mètre carré, mieux 10 points par mètre carré.

La corrélation du nuage de points scannés avec l'autre nuage de points, notamment formé de points scannés, peut résulter dans un premier temps dans le géoréférencement des coordonnées des points caractéristiques des cibles. Le procédé s'affranchit ainsi de l'étape de géoréférencement des cibles par intervention d'un opérateur qualifié, notamment un géomètre, lors de la prise des images.

L'autre nuage de points géoréférencé peut être obtenu par analyse numérique de données provenant d'un scan terrestre ou aérien, par exemple avec un lidar. Par exemple, l'autre nuage de points géoréférencé est un nuage de points scanné obtenu par lasergrammétrie. En variante, l'autre nuage de points géoréférencé peut être obtenu par photogrammétrie.

L'autre nuage de points géoréférencé représente de préférence une zone plus étendue que la scène. Par exemple, le nuage de points scannés représente un ensemble de rues et de bâtiments d'une ville et l'autre nuage de points représente un quartier de la ville contenant ledit ensemble, ou la ville.

Avantageusement, seul le géoréférencement de l'autre modèle peut être effectué à l'aide d'un opérateur qualifié tel un géomètre, et le géoréférencement par corrélation du nuage de points tel que décrit ci-dessus peut ainsi s'effectuer sans l'aide de l'opérateur. Par ailleurs, avantageusement, l'autre nuage de points peut définir un référentiel pour corréler plusieurs nuages de points scannés de différentes scènes qui sont chacun obtenus par le procédé selon l'invention.

Le procédé peut comporter la mise à l'échelle du nuage de points photogrammétriques à partir du nuage de points scannés, le facteur de mise à l'échelle étant déterminé à partir des coordonnées des points caractéristiques d'au moins deux, voire d'au moins trois, des cibles dans les repères respectifs liés auxdits nuages de points scannés et photogrammétriques.

Le procédé peut comporter le géoréférencement du nuage de points photogrammétrique, notamment dans un référentiel global au moyen des cibles géoréférencées au moyen du nuage de points scannés, notamment par corrélation avec l'autre nuage de points scannés, comme décrit ci-dessus. Ainsi, la mise à l'échelle et de géoréférencement du nuage de points photogrammétrique sont avantageusement réalisés en une unique étape.

L'invention a encore pour objet une méthode de construction d'un modèle 3D, la méthode comportant :
i) la mise en œuvre du procédé d'acquisition d'au moins une scène selon l'invention et la prise d'images d'au moins une autre scène, telle que mise en œuvre selon l'étape b) du procédé, la scène et l'autre scène partageant des éléments communs, l'autre scène étant notamment exempte de cible,
ii) la génération d'un nuage de points photogrammétriques représentant la scène et l'autre scène, et
iii) la génération d'un maillage 3D de la scène et de l'autre scène, à partir dudit nuage de points photogrammétriques, et optionnellement la texturation du maillage 3D pour attribuer une couleur aux éléments du maillage 3D, en particulier à partir des images acquises à l'étape i).

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] la figure 1 est un schéma en blocs illustrant un exemple de procédé d'acquisition selon l'invention,
[Fig 2a] la figure 2a représente un exemple de cible mise en œuvre pour le procédé selon l'invention,
[Fig 2b] la figure 2b représente une variante de cible mise en œuvre pour le procédé selon l'invention,
[Fig 3] la figure 3 est une vue schématique et partielle d'une scène,
[Fig 4a] la figure 4a est une vue schématique et partielle d'un nuage de points scannés,
[Fig 4b] la figure 4b est une vue d'un autre nuage de points scannés.
[Fig 5] la figure 5 illustre un exemple de corrélation entre deux nuages de points scannés,
[Fig 6] la figure 6 illustre l'extraction des coordonnées des cibles selon l'invention,
[Fig 7] la figure 7 représente isolément une autre partie de la scène de la figure 3,
[Fig 8] la figure 8 représente un exemple de dispositif d'imagerie, et
[Fig 9] la figure 9 illustre un exemple de dispositif de télédétection.

### Description détaillée

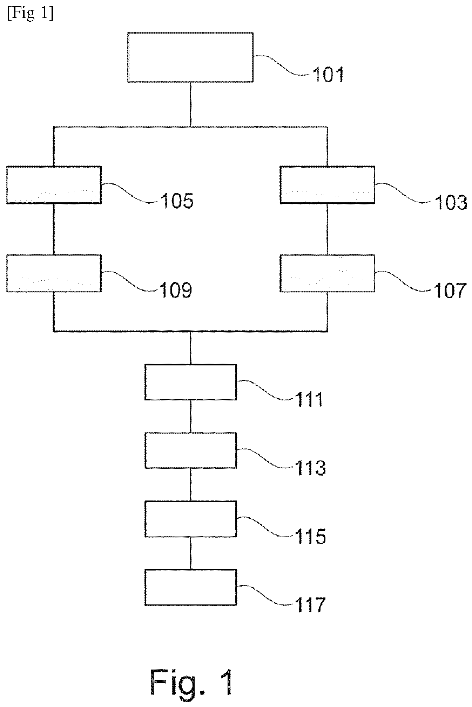

On a illustré à la figure 1 un exemple de mise en œuvre du procédé d'acquisition d'une scène 5 selon l'invention.

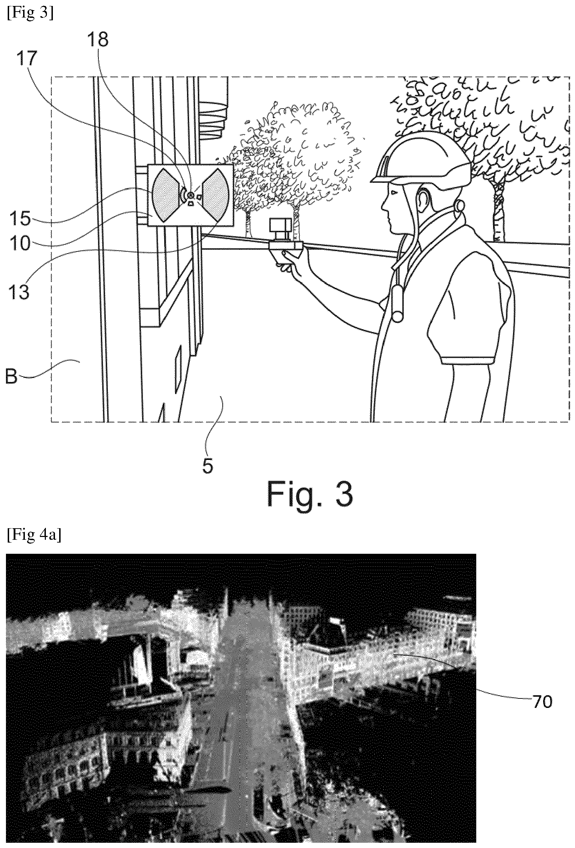

Dans l'exemple de la figure 3, la scène 5 est un quartier d'une ville comportant plusieurs rues avec des immeubles B.

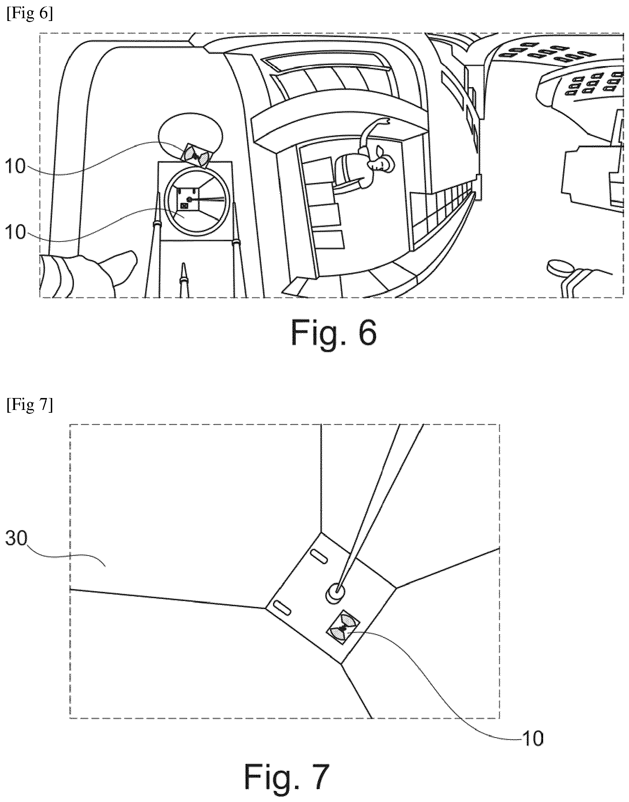

On commence par disposer, à l'étape 101, dans la scène 5 une pluralité de cibles 10. La scène peut contenir un branchement de regard 30 d'un réseau d'égout qui débouche en surface. Au moins une des cibles 10 peut être disposée dans le branchement de regard 30 comme illustré à la figure 7.

Les autres cibles peuvent être fixées en des emplacement de cible, par exemple sur le mur d'un des bâtiments, sur un élément de mobilier urbain ou sur un poteau de signalisation, comme cela est illustré à la figure 3. A ce stade, le géoréférencement des cibles 10 au moyen d'un appareil adapté tel un théodolite, est optionnel.

Au moins trois cibles, voire plus de trois cibles, mieux plus de cinq cibles, voire plus de dix cibles peuvent être disposées dans la scène.

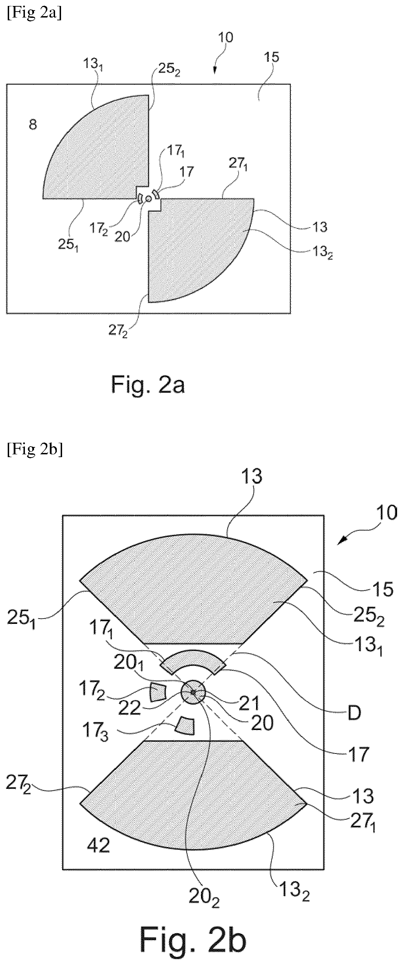

Comme illustré aux figures 2a et 2b, chaque cible 10 comporte un support 15, un motif caractéristique identifiable par analyse numérique des données du scan 13, dit « motif à scanner », et un motif caractéristique identifiable par photogrammétrie 17, dit « motif photogrammétrique ».

Le support peut être comme illustré une feuille rigide, par exemple thermoplastique, de format A4.

Les motif à scanner et motif photogrammétrique sont appliqués sur le support. Dans l'exemple illustré, ils sont imprimés sur le support. D'autres méthodes d'application sont envisageables. Par exemple, ils peuvent être collés ou peints.

Dans les exemples illustrés, la cible 10 se présente sous la forme d'une plaque. Une telle forme n'est cependant pas limitative. D'autres formes peuvent être envisagées

Dans les exemples illustrés, le motif photogrammétrique 17 est codé. Il comporte des portions annulaires 171-3 noires s'étendant autour d'un axe X central et normal au support.

Le motif photogrammétrique 17 comporte en outre une portion centrale 20 définissant le centre de la cible 21.

Comme illustré aux figures 2a-b, la portion centrale 20 est définie par deux contours 201-2 homothétiques l'un de l'autre qui forment un disque central percé 22, de couleur noire, dont le centre est le centre de la cible 21.

Dans l'exemple des figures 2a et 2b, le motif photogrammétrique 17 est situé au centre de la cible 10 et le motif à scanner 13 entoure le motif photogrammétrique, deux parties du motif à scanner 131-2 étant disposées de part et d'autre du motif photogrammétrique.

La partie du motif à scanner 131 présente un contour comportant deux segments 251-2 qui sont supportés par des droites qui s'intersectent au centre de la cible. De manière similaire, la partie 132 présente un contour comportant deux segments 271-2.

Dans les exemples illustrés, les segments 251 et 271 sont supportés par une même droite D1, et les segments 252 et 272 sont supportés par une même droite D2.

Les droites D1 et D2 s'intersectent au centre de la cible 21.

Ainsi, les parties 131 et 132 sont symétriques par rapport au centre de la cible. Par ailleurs, le motif à scanner et le motif photogrammétrique sont centrés sur un même point caractéristique qui est le centre de la cible, ce qui facilite le traitement des données photogrammétriques et des données de scan qui sont acquises grâce aux cibles.

De préférence, le motif photogrammétrique 17 d'une des cibles 10 disposées dans la scène 5 est différent du motif photogrammétrique d'au moins une des autres cibles de la scène. Le motif photogrammétrique peut présenter un nombre de portions annulaires 171-3 variable entre au moins deux cibles, comme illustré aux figures 2a-b.

Une fois les cibles 10 disposées dans la scène 5, les étapes de prise 103 d'images de la scène au moyen d'un dispositif d'imagerie et de scan 105 de la scène sont mis en œuvre.

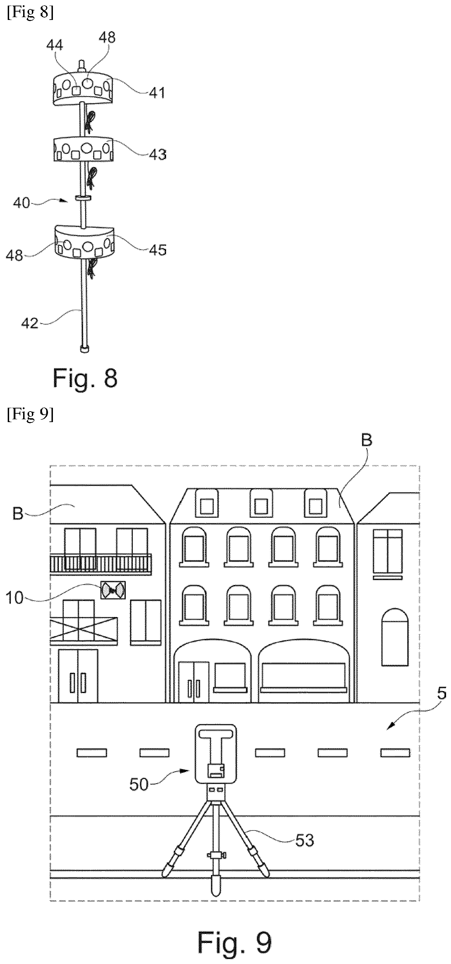

A l'étape 103, un dispositif d'imagerie 40 comportant une pluralité de caméras 44 est disposé dans la scène en une pluralité d'emplacements de prise d'image, comme illustré à la figure 8. Les caméras 44 peuvent prendre au moins une image de la scène en chaque emplacement de prise d'image. Les emplacements de prise d'image sont choisis de telle sorte que les images prises en au moins deux emplacements de prise d'image se recouvrent. Dans l'exemple illustré, le dispositif d'imagerie 40 comporte une canne 12 d'axe longitudinal X et trois étages 41,43,45 de prise d'image comportant chacun des caméras 44 ainsi que des lampes 48 pour éclairer la scène. Les caméras de chaque étage sont réparties angulairement autour de l'axe X sur un secteur angulaire total d'angle égal à 180°, de manière à couvrir largement la scène à imager.

La canne présente un pied 42 à son extrémité inférieure, destiné à entrer en contact avec le sol.

A l'étape 105, un dispositif de télédétection optique 50 est également disposé dans la scène 5 pour effectuer le scan de la scène 5 et des cibles 10, comme illustré à la figure 9.

Le dispositif de télédétection 50 est par exemple un lidar qui comprend une base statique 53 et une tête de scan 55 mobile en rotation autour de la base. Par exemple, le scan de la scène 5 est réalisé avec au moins une rotation de la tête 55 de scan sur elle-même autour d'un axe de rotation, fixe durant la rotation.

En variante, le dispositif de télédétection 50 est mobile pendant le scan de la scène 5.

Par la suite, les images acquises à l'étape 103 ainsi que les données du scan obtenues à l'étape 105 sont analysées numériquement, au moyen d'un ordinateur, par traitement photogrammétrique 107 et par traitement des données du scan 109, afin de générer des nuages de points photogrammétriques et scannés, respectivement.

Les nuages de points scannés et photogrammétriques ainsi générés comportent chacun les coordonnées d'au moins un point caractéristique, par exemple le centre 18, de chaque cible 10.

De préférence, les nuages de points scannés et photogrammétriques sont stockés numériquement, notamment sur un moyen de stockage informatique, tel qu'un disque optique, un disque dur, un disque SSD, une carte SD ou une clé USB.

Avantageusement, une métadonnée relative à la cible est attribuée aux points de la cibles stockés, par exemple aux centres des cibles. La métadonnée peut correspondre à un identifiant de la cible, par exemple reconnu par lecture du motif photogrammétrique qui est un QR code.

Comme décrit plus haut, les cibles 10 peuvent ne pas avoir été géo-référencées préalablement à la prise des images et au scan de la scène. L'invention, en s'affranchissant de l'étape de géo-référencement des cibles 10 lors de l'acquisition, peut ainsi participer réduire le temps passé pour acquérir la scène.

Le géoréférencement des cibles 10 peut être obtenu ultérieurement à la génération des nuages de points.

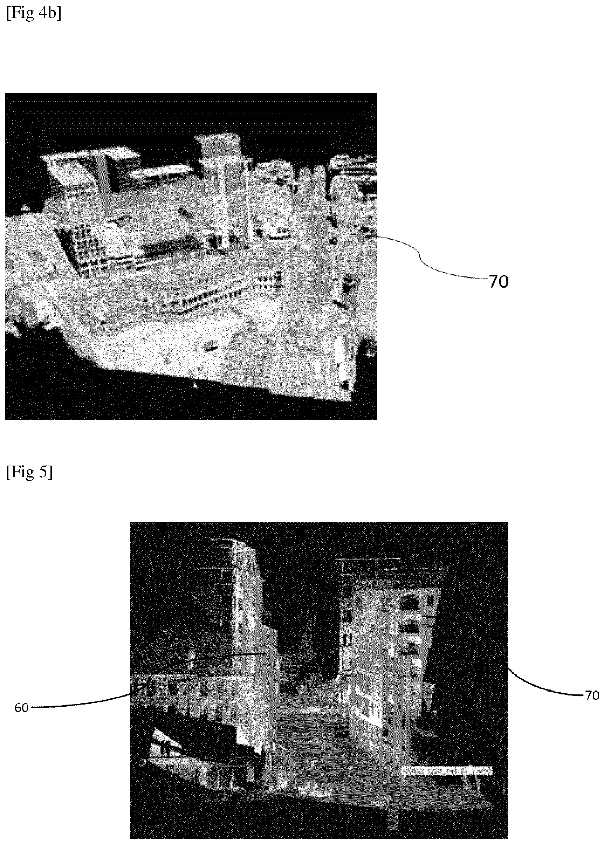

Afin de géoréférencer les cibles 10, le nuage de points scanné 60 peut être corrélé 111 avec un autre nuage de points 70 représentant une zone plus étendue que la scène 5 et qui est lui-même géoréférencé. Un exemple de résultat graphique de corrélation des nuages de points est illustré par la figure 5.

La corrélation des nuages de points peut être réalisée par une méthode mathématique qui cherche à minimiser la distance entre les deux nuages représentant une même partie de la scène. Des méthodes de régression et/ou d'optimisation convexe peuvent être employées dans pour le recalage du points nuages scannés sur l'autre nuage de points.

L'autre nuage de points 70 est par exemple géoréférencé au moyen de repères topographiques, ou avec des positions de points mesurées au moyen de repères topographiques.

L'autre nuage de points géoréférencé peut être obtenu par analyse numérique de données provenant d'un scan réalisé, par exemple au moyen d'un lidar embarqué dans un véhicule automobile, comme illustré à la figure 4a, ou dans un avion, un hélicoptère ou un drone, comme illustré à la figure 4b.

Dans les exemples illustrés, l'autre nuage de points géoréférencé 70 est un nuage de points scannés obtenu par lasergrammétrie.

Après corrélation, le nuage de points scanné 60, obtenu par traitement du scan de la scène 5 à l'étape 109 est ainsi géoréférencé à l'étape 111.

A l'étape 113, les coordonnées géoréférencées des points caractéristiques des cibles 10 peuvent ainsi être extraites, comme illustré par la figure 6.

La position des cibles 10 étant connue dans le nuage de points scannés et dans le nuage de points photogrammétriques, le nuage de points photogrammétrique peut alors être géoréférencé à son tour et mis à l'échelle, à l'étape 115. Le facteur de mise à l'échelle est déterminé à partir des coordonnées des points caractéristiques d'au moins deux, voire d'au moins trois, des cibles dans les repères respectifs liés auxdits nuages de points scannés et photogrammétriques.

Le nuage de points photogrammétrique géoréféréncé et mis à l'échelle peut être utilisé pour construire un modèle numérique 3D de la scène, qui peut être maillé et texturé.

Bien entendu, l'invention n'est pas limitée aux exemples illustrés.

## Revendications

1. Procédé d'acquisition d'au moins une scène, le procédé comportant
a) la mise en place d'au moins trois cibles (10) différentes en des emplacements de cible différents de la scène,
b) la prise d'images numériques de la scène et des cibles au moyen d'un dispositif d'imagerie (40) comportant au moins une caméra, les emplacements de prise d'images étant choisis de telle sorte qu'au moins deux des images se recoupent, et
c) le scan de la scène et des cibles au moyen d'un dispositif de télédétection optique (50), chaque cible comportant :
- un motif caractéristique identifiable par analyse numérique des données du scan (13), dit « motif à scanner », et
- un motif caractéristique identifiable par photogrammétrie (17), dit «motif photogrammétrique ».

2. Procédé selon la revendication 1, comportant la génération d'un nuage de points par analyse numérique des données du scan, dit « nuage de points scannés », et d'un nuage de points par photogrammétrie, dit « nuage de points photogrammétriques », les nuages de points scannés et photogrammétriques comportant de préférence chacun les coordonnées d'au moins un point caractéristique, par exemple le centre, de chaque cible dans des repères respectifs.

3. Procédé selon l'une quelconque des revendications 1 et 2, l'étape b) étant réalisée avant l'étape c), ou après l'étape c), ou simultanément à l'étape c).

4. Procédé selon l'une quelconque des revendications précédentes, le dispositif de télédétection optique étant un lidar.

5. Procédé selon l'une quelconque des revendications précédentes, au moins une des cibles, de préférence chaque cible, comportant un support (15), le motif photogrammétrique étant appliqué sur le support.

6. Procédé selon l'une quelconque des revendications précédentes, le motif à scanner entourant, au moins partiellement, le motif photogrammétrique.

7. Procédé selon l'une quelconque des revendications précédentes, le motif photogrammétrique comportant une portion centrale (20) définissant le centre (21) de la cible et le motif à scanner étant centré par rapport audit centre de la cible.

8. Procédé selon l'une quelconque des revendications précédentes, le motif photogrammétrique d'une des cibles étant différent du motif photogrammétrique d'au moins une des autres cibles, et de préférence les cibles comportant le même motif à scanner.

9. Procédé selon l'une quelconque des revendications 2 à 8 comportant le géoréférencement du nuage de points scannés, notamment dans un référentiel global.

10. Procédé selon la revendication précédente, le nuage de point scannés étant géoréférencé en corrélant le nuage de points scannés avec un autre nuage de points scannés représentant au moins la scène et qui est géoréférencé, par exemple au moyen de repères topographiques, ou avec des positions de points mesurées au moyen de repères topographiques.

11. Procédé selon la revendication précédente, l'autre nuage de points scannés géoréférencé représentant une zone plus étendue que la scène.

12. Procédé selon l'une quelconque des revendications précédentes dépendantes de la revendication 2, comportant la mise à l'échelle du nuage de points photogrammétriques à partir du nuage de points scannés, le facteur de mise à l'échelle étant déterminé à partir des coordonnées des points caractéristiques d'au moins deux, voire d'au moins trois, des cibles dans les repères respectifs liés auxdits nuages de points scannés et photogrammétriques.

13. Procédé selon la revendication précédente, comportant le géoréférencement du nuage de points photogrammétrique, notamment dans un référentiel donné, par exemple global.

14. Procédé selon l'une quelconque des revendications précédentes, la scène comportant au moins une pièce mécanique, ou une construction, par exemple un bâtiment ou un ouvrage de génie civil, ou un élément de construction, par exemple une canalisation.

15. Procédé selon l'une quelconque des revendications précédentes, dans lequel la scène contient un branchement de regard d'un réseau d'égout qui débouche en surface, au moins une des cibles étant disposée dans le branchement de regard et au moins une autre des cibles étant disposée en surface.

16. Procédé selon la revendication précédente, la ou les autres cibles étant fixées sur un mur d'un bâtiment ou sur un élément de mobilier urbain ou sur un poteau de signalisation.
